# EUROPEAN PATENT APPLICATION

(11) **EP 4 481 303 A1**
(43) Date of publication of application: **25.12.2024**
(21) Application number: 23752973.0
(22) Date of filing: 13.02.2023
(51) Int. Cl.: F25B 41/40, B23K 1/00, F24F 1/30

(54) **REFRIGERANT FLOW PATH MODULE AND AIR CONDITIONER**

(30) Priority: 14.02.2022 JP 2022020283
(71) Applicant: DAIKIN INDUSTRIES, LTD., Osaka-shi, Osaka 530-0001 (JP)
(72) Inventor: HAMADATE, Junichi, Osaka-shi, Osaka 530-0001 (JP); KOIKE, Fumiaki, Osaka-shi, Osaka 530-0001 (JP); KINOSHITA, Atsushi, Osaka-shi, Osaka 530-0001 (JP); YAKURA, Naritaka, Osaka-shi, Osaka 530-0001 (JP); KOMAKI, Ayumi, Osaka-shi, Osaka 530-0001 (JP); ONO, Asahi, Osaka-shi, Osaka 530-0001 (JP)
(74) Representative: Hoffmann Eitle
(86) International application number: PCT/JP2023/004802
(87) International publication number: WO 2023/153511

(57) **Abstract**

A refrigerant flow path module provided with a refrigerant flow path (15) inside includes a first plate (21), a second plate (22) that is overlapped on the first plate (21), a refrigerant pipe (12) that contains copper and is attached to the first plate (21), a brazing material (17) that contains copper and joins facing surfaces of the first plate (21) and the second plate (22) to each other, and a storage (40, 41, 42, 43, 72, 74) that stores the brazing material (17) in excess.

## Description

### TECHNICAL FIELD

The present disclosure relates to a refrigerant flow path module and an air conditioner.

### BACKGROUND ART

In a known refrigeration apparatus including a refrigerant circuit for carrying out a vapor compression refrigeration cycle operation, a plurality of refrigerant pipes through which a refrigerant flows has been integrated into one unit in order to reduce the size of the refrigerant circuit. For example, PATENT LITERATURE 1 discloses a plate-shaped refrigerant pipe including a first plate, a second plate joined to the first plate and constituting a refrigerant flow path together with the first plate, and a coupling pipe that is attached to the first plate and the second plate and to which another refrigerant pipe is connected by brazing.

The first plate and the second plate of the plate-shaped refrigerant pipe includes stainless steel. The coupling pipe includes the same material as the other refrigerant pipe, for example, copper, in consideration of brazeability with the other refrigerant pipe. The plate-shaped refrigerant pipe is put into a furnace in a state where a brazing material is set between the first plate and the second plate and a brazing material is set between the first plate and the second plate and the coupling pipe, and heated to be brazed in a furnace.

### CITATION LIST

### [PATENT LITERATURE]

PATENT LITERATURE 1: Japanese Laid-Open Patent Publication No. 2021-71268

### SUMMARY OF THE INVENTION

### [TECHNICAL PROBLEM]

For brazing between the first plate and the second plate of stainless steel, for example, a brazing material containing copper, such as bronze brazing, is used. The brazing material has a melting point lower than a melting point of copper which is a material of the coupling pipe. However, when the brazing material is melted and comes into contact with the copper coupling pipe during in-furnace brazing, a phenomenon may occur in which the melting point of the coupling pipe is lowered. When this phenomenon occurs, there is a possibility that the coupling pipe is melted by in-furnace brazing.

An object of the present disclosure is to provide a refrigerant flow path module capable of preventing a refrigerant pipe attached to a plate from melting, and an air conditioner.

### [SOLUTION TO PROBLEM]

(1) The present disclosure is
   a refrigerant flow path module provided with a refrigerant flow path inside, the refrigerant flow path module including
   a first plate,
   a second plate that is overlapped on the first plate,
   a refrigerant pipe that contains copper and is attached to the first plate,
   a brazing material that contains copper and joins facing surfaces of the first plate and the second plate to each other, and
   a storage that stores the brazing material in excess.
   In this configuration, since the refrigerant flow path module includes the storage that stores the brazing material in excess, the brazing material in excess can be prevented from reaching the refrigerant pipe and melting the refrigerant pipe.
(2) In the refrigerant flow path module according to (1), the refrigerant pipe is preferably inserted into a hole formed in the first plate,
   the second plate is preferably provided with an opening that communicates with the refrigerant pipe and constitutes the flow path,
   the hole is preferably disposed inside the opening as viewed in a stacking direction of the first plate and the second plate, and
   the storage is preferably formed at a boundary portion between an inner peripheral surface of the opening and a plate surface of the first plate facing the second plate.
   In this configuration, the brazing material in excess is stored by utilizing the boundary portion between the inner peripheral surface of the opening and the plate surface of the first plate, and the brazing material can be prevented from reaching the refrigerant pipe.
(3) In the refrigerant flow path module according to (1), the refrigerant pipe is preferably inserted into a hole formed in the first plate,
   the second plate is preferably provided with an opening that communicates with the refrigerant pipe and constitutes the flow path,
   the hole is preferably disposed inside the opening as viewed in the stacking direction of the first plate and the second plate, and
   the storage preferably includes a groove disposed away from the hole radially outward and formed in a portion of the plate surface of the first plate facing the second plate, the portion facing the flow path.
   In this configuration, by storing the brazing material in excess in the groove, the brazing material can be prevented from reaching the refrigerant pipe.
(4) The refrigerant flow path module according to (2) or (3) preferably further includes a third plate that is overlapped on a side of the second plate opposite to the first plate, and a brazing material that contains copper and joins facing surfaces of the second plate and the third plate to each other,
   in which the third plate is provided with a second opening that communicates with the refrigerant pipe and constitutes the flow path,
   the opening is disposed inside the second opening as viewed in the stacking direction of the first plate and the second plate, and
   the storage is formed at a boundary portion between an inner peripheral surface of the second opening and a plate surface of the second plate facing the third plate.
   In this configuration, the brazing material in excess is stored by utilizing the boundary portion between the inner peripheral surface of the second opening and the plate surface of the second plate, and the brazing material can be prevented from reaching the refrigerant pipe.
(5) The refrigerant flow path module according to (2) or (3) preferably further includes a third plate that is overlapped on a side of the second plate opposite to the first plate, and a brazing material that contains copper and joins facing surfaces of the second plate and the third plate to each other,
   in which the third plate is provided with a second opening that communicates with the refrigerant pipe and constitutes the flow path,
   the second opening is disposed inside the opening as viewed in the stacking direction of the first plate and the second plate, and
   the storage is formed at a boundary portion between an inner peripheral surface of the opening and a plate surface of the third plate facing the second plate.
   In this configuration, the brazing material in excess is stored by utilizing the boundary portion between the inner peripheral surface of the opening and the plate surface of the third plate, and the brazing material can be prevented from reaching the refrigerant pipe.
(6) In the refrigerant flow path module according to (1), the storage preferably includes the insertion hole formed in the first plate and opened on the plate surface of the first plate facing the second plate, and the insertion member inserted into the insertion hole with a gap.
   In this configuration, the brazing material in excess is stored by utilizing the gap between the insertion hole and the insertion member, and the brazing material can be prevented from reaching the refrigerant pipe.
(7) In the refrigerant flow path module according to (6), the first plate is preferably disposed at an end of the refrigerant flow path module in the stacking direction of the first plate and the second plate, and
   the insertion hole preferably opens on a plate surface of the first plate opposite to the second plate.
   In this configuration, the brazing material in excess can be discharged to the outside of the refrigerant flow path module from the gap between the insertion hole and the insertion member.
(8) In the refrigerant flow path module according to (1), the refrigerant pipe is preferably inserted into a hole formed in the first plate,
   the second plate is preferably provided with an opening that communicates with the refrigerant pipe and constitutes the flow path,
   a chamfered portion is preferably formed at a boundary between an inner peripheral surface of the opening in the second plate and a plate surface of the second plate facing the first plate, and
   the storage preferably includes the chamfered portion.
   In this configuration, the brazing material in excess is stored by utilizing the space formed by the chamfered portion, and the brazing material can be prevented from reaching the refrigerant pipe.
(9) The refrigerant flow path module according to (8) preferably further includes a third plate that is overlapped on a side of the second plate opposite to the first plate, and a brazing material that contains copper and joins facing surfaces of the second plate and the third plate to each other,
   in which the third plate is provided with a second opening that communicates with the refrigerant pipe and constitutes the flow path,
   a second chamfered portion is formed at a boundary between an inner peripheral surface of the second opening in the third plate and a plate surface of the third plate facing the second plate or at a boundary between the inner peripheral surface of the first opening in the second plate and a plate surface of the second plate facing the third plate, and
   the storage includes the second chamfered portion.
   In this configuration, the brazing material in excess is stored by utilizing the space formed by the second chamfered portion, and the brazing material can be prevented from reaching the refrigerant pipe.
(10) In the refrigerant flow path module according to any one of (1) to (9), a third chamfered portion is preferably formed at a boundary between an outer peripheral surface of the second plate and the plate surface of the second plate facing the first plate or at a boundary between an outer peripheral surface of the first plate and a plate surface of the first plate facing the second plate, and the storage preferably includes the third chamfered portion.
   In this configuration, the brazing material in excess is stored by utilizing the space formed by the third chamfered portion, and the brazing material can be prevented from reaching the refrigerant pipe.
(11) An air conditioner of the present disclosure includes the refrigerant flow path module according to any one of (1) to (10).

### BRIEF DESCRIPTION OF DRAWINGS

FIG. 1 is a perspective view of a refrigerant flow path module according to a first embodiment of the present disclosure.
FIG. 2 is a plan view of the refrigerant flow path module.
FIG. 3 is a front view of the refrigerant flow path module.
FIG. 4 is an exploded front view of the refrigerant flow path module.
FIG. 5 is an enlarged sectional view of a part of the refrigerant flow path module.
FIG. 6 is an enlarged sectional view of the refrigerant flow path module, illustrating a portion into which an insertion member is inserted.
FIG. 7 is an enlarged sectional view of the refrigerant flow path module, illustrating a portion where plates are fastened by a fastening member.
FIG. 8 is an enlarged sectional view of a part of a refrigerant flow path module according to a second embodiment.
FIG. 9 is an enlarged sectional view of a part of a refrigerant flow path module according to a third embodiment.
FIG. 10 is an enlarged sectional view of a part of a refrigerant flow path module according to a fourth embodiment.
FIG. 11 is an enlarged sectional view of a portion into which an insertion member is inserted in a refrigerant flow path module according to a fifth embodiment.
FIG. 12 is an enlarged sectional view of a portion into which an insertion member is inserted in a refrigerant flow path module according to a sixth embodiment.
FIG. 13 is an enlarged sectional view of a part of a refrigerant flow path module according to a seventh embodiment.
FIG. 14 is an enlarged sectional view of a part of a refrigerant flow path module according to an eighth embodiment.
FIG. 15 is an enlarged sectional view of a part of a refrigerant flow path module according to a ninth embodiment.
FIG. 16 is an enlarged sectional view of a part of a refrigerant flow path module according to a tenth embodiment.
FIG. 17 is a plan view illustrating an inside of an air conditioner according to an embodiment of the present disclosure.

### DETAILED DESCRIPTION

Embodiments of the present disclosure will be described in detail hereinafter with reference to the accompanying drawings.

### [First embodiment]

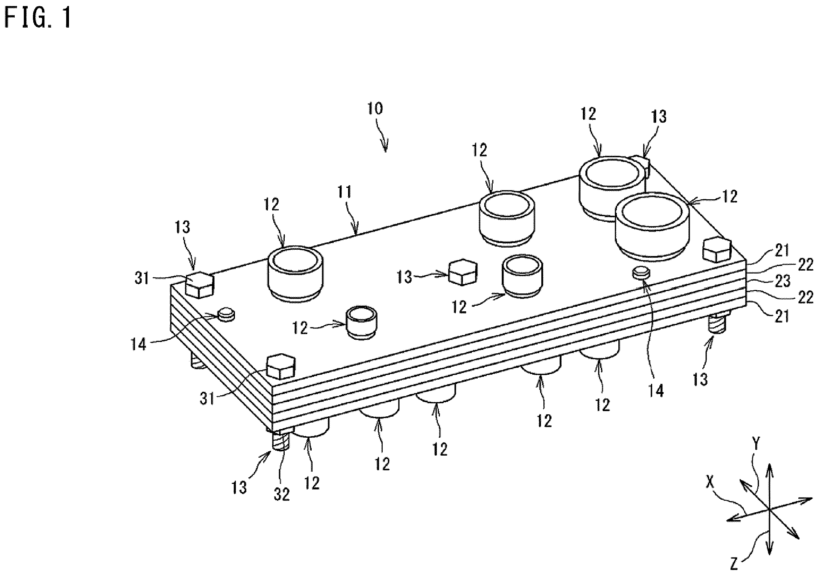

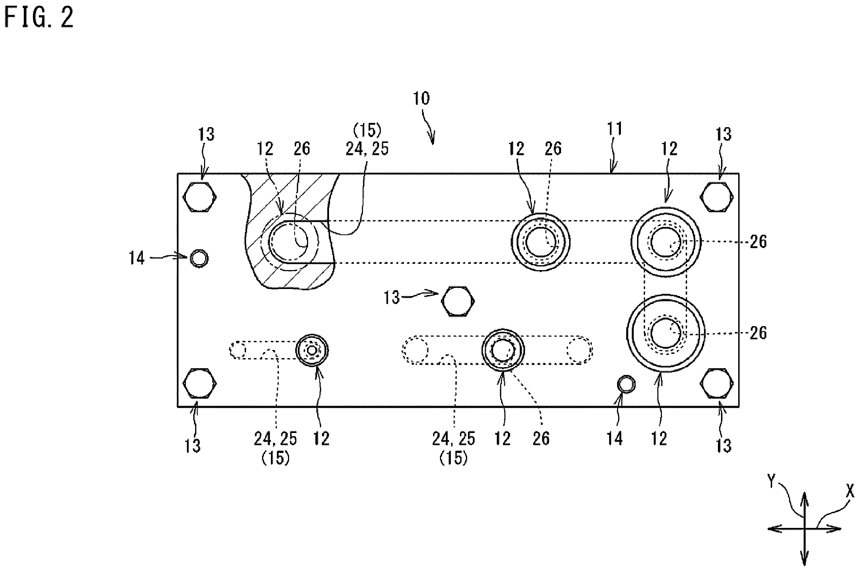

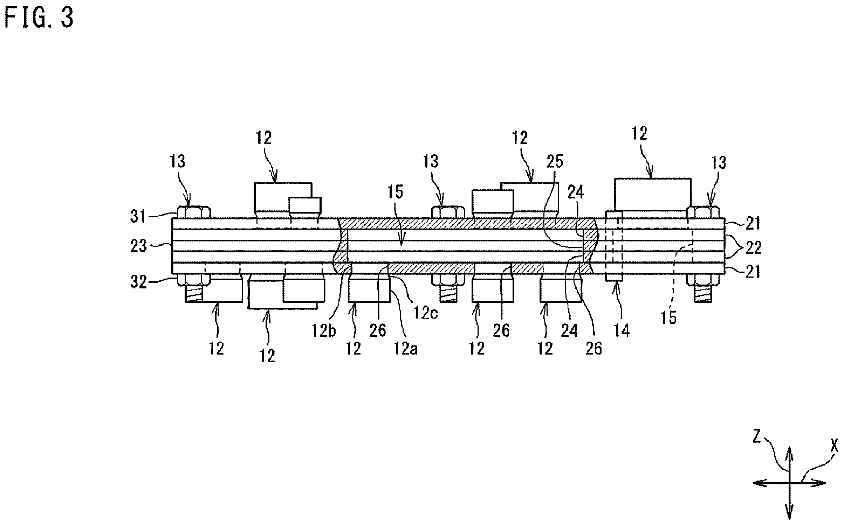

FIG. 1 is a perspective view of a refrigerant flow path module according to a first embodiment of the present disclosure. FIG. 2 is a plan view of the refrigerant flow path module. FIG. 3 is a front view of the refrigerant flow path module.

A refrigerant flow path module 10 according to the present embodiment is applied to, for example, an air conditioner including a refrigerant circuit that carries out a vapor compression refrigeration cycle operation. Devices such as a four-way switching valve, an electromagnetic valve, a compressor, an accumulator, and an oil separator that constitute a refrigeration circuit are connected to the refrigerant flow path module 10.

The refrigerant flow path module 10 includes a module body 11, a coupling pipe (refrigerant pipe) 12, a fastening member 13, and an insertion member 14. The module body 11 includes a flow path 15 (see FIGs. 2 and 3) through which a refrigerant flows inside. The module body 11 includes a plurality of plates 21, 22, and 23. The plurality of plates 21, 22, and 23 is stacked and joined to each other. The plates 21, 22, and 23 adjacent to each other are joined by brazing. The module body 11 according to the present embodiment is supported, for example, in a casing of an air conditioner in an orientation in which plate surfaces of the plates 21, 22, and 23 are in a horizontal direction.

The plates 21, 22, and 23 according to the present embodiment include stainless steel. The plates 21, 22, and 23 according to the present embodiment include SUS304L, for example. The plates 21, 22, and 23 have rectangular plate surfaces. In the following description, a direction perpendicular to the plate surfaces of the plates 21, 22, and 23 (normal direction of the plates 21, 22, and 23), in other words, a direction in which the plurality of plates 21, 22, and 23 is stacked is also referred to as a first direction Z. Two directions that are along the plate surfaces of the plates 21, 22, and 23 (directions orthogonal to the first direction Z) and are orthogonal to each other are also referred to as a second direction X and a third direction Y In the present embodiment, the long sides of the plates 21, 22, and 23 are disposed along the second direction X, and the short sides are disposed along the third direction Y The shape of the plate surfaces of the plates 21, 22, and 23 is not limited to a rectangle, and may be a square, a polygon other than a quadrangle, a circle including an ellipse and an oval, or the like.

The plurality of plates 21, 22, and 23 have rectangular plate surfaces having the same shape. The plurality of plates 21, 22, and 23 have the same thickness (length in the first direction Z). However, the plurality of plates 21, 22, and 23 may have different rectangular shapes, for example, lengths of long sides or lengths of short sides, or may have different thicknesses.

The plurality of plates 21, 22, and 23 include two end plates 21 disposed at both ends in the first direction Z and intermediate plates 22 and 23 disposed between the two end plates 21. The refrigerant flow path module 10 according to the present embodiment includes three intermediate plates 22 and 23. The three intermediate plates 22 and 23 are stacked between the end plates 21 at both ends.

As illustrated in FIGs. 2 and 3, each of the end plates 21 is provided with an attachment hole 26 for attaching the coupling pipe 12. The attachment hole 26 passes through the end plates 21 in the first direction Z. The attachment hole 26 has a circular shape.

The intermediate plates 22 and 23 are provided with openings 24 and 25 constituting the flow path 15 for the refrigerant. The openings 24 and 25 pass through the intermediate plates 22 and 23 in the first direction Z. The openings 24 and 25 are long in the second direction X or the third direction Y, or have a circular shape. The shape of the openings 24 and 25 is not limited, and the shape is appropriately set in accordance with a required form of the flow path 15.

As illustrated in FIG. 2, the attachment hole 26 formed in the end plate 21 is disposed inside the openings 24 and 25 formed in the intermediate plates 22 and 23 as viewed in the first direction Z (a direction passing on the sheet of FIG. 2).

The coupling pipe 12 has a substantially cylindrical shape. The coupling pipe 12 includes a material containing copper, for example, copper (pure copper) or a copper alloy. The coupling pipe 12 is disposed to have an axis parallel to the first direction Z. Therefore, the axis of the coupling pipe 12 is perpendicular to the plate surface of the end plate 21.

As illustrated in FIG. 3, the first coupling pipe 12 has a large diameter portion 12a at one end in an axial direction, a small diameter portion 12b at the other end, and a stepped portion 12c in the middle. The large diameter portion 12a and the small diameter portion 12b have a cylindrical shape. The diameter of the large diameter portion 12a is larger than the diameter of the small diameter portion 12b. The stepped portion 12c has a conical shape such that the diameter gradually decreases from the large diameter portion 12a toward the small diameter portion 12b. The small diameter portion 12b of the coupling pipe 12 is inserted into the attachment hole 26 formed in the end plate 21. An outer peripheral surface of the small diameter portion 12b and an inner peripheral surface of the attachment hole 26 are bonded by brazing.

For example, a refrigerant pipe constituting the refrigerant circuit of the air conditioner is connected to the large diameter portion 12a of the coupling pipe 12. A port of a component such as a valve constituting the refrigerant circuit may be directly connected to the large diameter portion 12a of the coupling pipe 12.

The fastening member 13 fastens the plurality of plates 21, 22, and 23 to each other. The fastening member 13 includes stainless steel. As illustrated in FIGs. 1 and 3, the fastening member 13 includes a bolt 31 and a nut 32. The bolt 31 passes through the plurality of plates 21, 22, and 23 in the first direction Z, and the nut 32 is attached to a tip of the bolt 31 passing through the plates 21, 22, and 23. The refrigerant flow path module 10 according to the present embodiment includes a plurality of (five in the present embodiment) fastening members 13. The plurality of fastening members 13 is provided at four corners and substantially the center of the module body 11 as viewed in the first direction Z. The number and arrangement of the fastening members 13 are not limited. Details of the fastening member 13 will be described later.

The insertion member 14 includes a cylindrical pin. The insertion member 14 includes stainless steel. As illustrated in FIG. 3, the insertion member 14 passes through the plurality of plates 21, 22, and 23 in the first direction Z. The insertion member 14 is attached to the plurality of plates 21, 22, and 23 by brazing. The refrigerant flow path module 10 includes a plurality of (two in the present embodiment) insertion members 14. The plurality of insertion members 14 is disposed on both sides in a longitudinal direction of the module body 11 in a distributed manner. However, the number and arrangement of the insertion members 14 are not limited. Details of the insertion member 14 will also be described later.

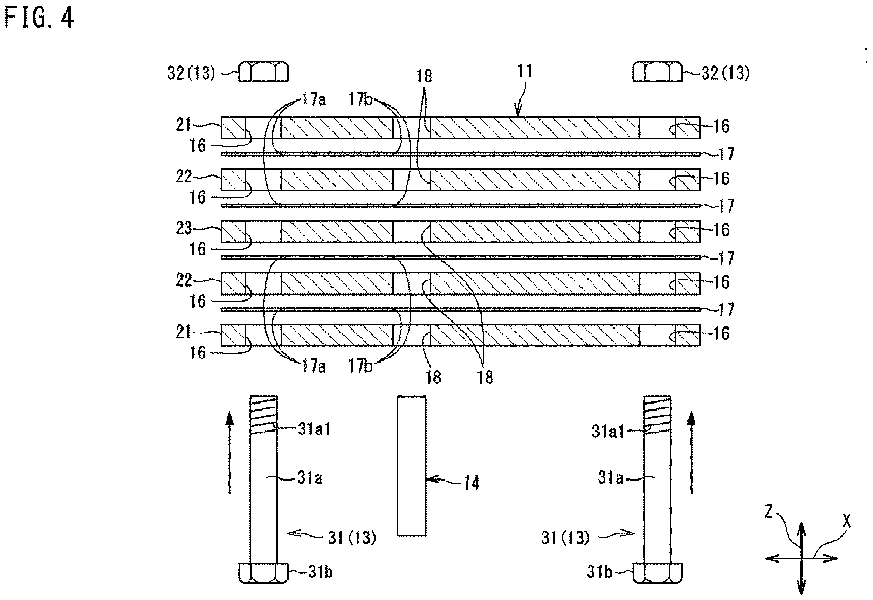

FIG. 4 is an exploded front view of the refrigerant flow path module.

The plurality of plates 21, 22, and 23 constituting the module body 11 of the refrigerant flow path module 10 is joined by brazing in a heating furnace (hereinafter, also referred to as in-furnace brazing). In order to manufacture the refrigerant flow path module 10, first, the sheet-shaped brazing material 17 is disposed between the adjacent plates 21, 22, and 23, and the plates 21, 22, and 23 and the brazing material 17 are stacked. An insertion hole 16 into which the bolt 31 of the fastening member 13 is inserted and an insertion hole 18 into which the insertion member 14 is inserted are formed to pass through the plurality of plates 21, 22, and 23 in the first direction Z. An insertion hole 17a corresponding to the insertion hole 16 and an insertion hole 17b corresponding to the insertion hole 18 are formed to pass through the sheet-shaped brazing material 17 in the first direction Z.

A shaft 31a of the bolt 31 is inserted into the insertion hole 16 of the stacked plates 21, 22, and 23 and the insertion hole 17a of the brazing material 17 from below, the nut 32 is attached to a screw groove 31a1 at an upper end of the shaft 31a, and the plurality of plates 21, 22, and 23 is fastened by the bolt 31and the nut 32. The insertion member 14 is inserted into the insertion hole 18 of the stacked plates 21, 22, and 23 and the insertion hole 17b of the brazing material 17 from below or above.

The plates 21, 22, and 23 fastened by the fastening members 13 are put into a brazing furnace and heated. As a result, the brazing material 17 is melted, and the plurality of plates 21, 22, and 23 is joined. The insertion member 14 is brazed to the plates 21, 22, and 23 by brazing material in excess protruding from between the plates 21, 22, and 23.

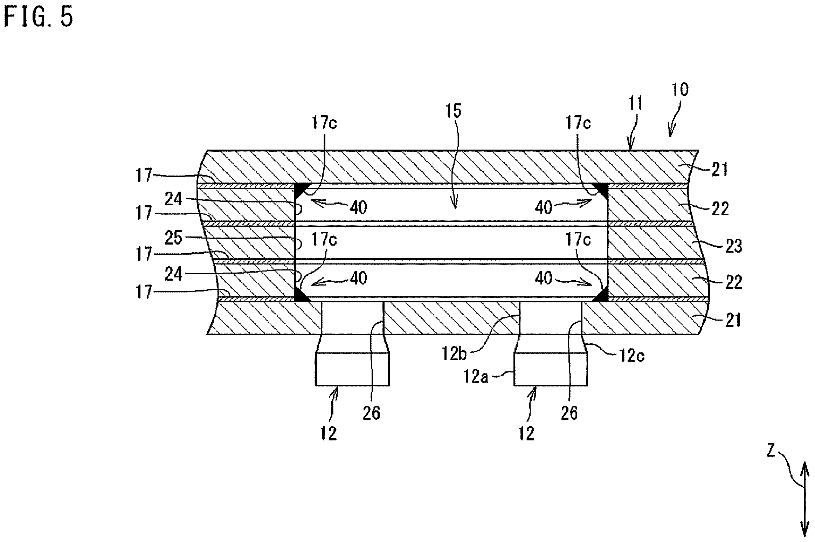

FIG. 5 is an enlarged sectional view of a part of the refrigerant flow path module. FIG. 5 and FIGs. 6 to 16 described later all shown an orientation at the time of brazing.

For brazing between the end plate 21 and the intermediate plates 22 and 23 of stainless steel, for example, the brazing material 17 containing copper such as bronze brazing is used. The brazing material 17 has a melting point lower than a melting point of copper which is a material of the coupling pipe 12. In the in-furnace brazing, only the brazing material 17 is usually melted because the brazing material 17 is heated at a temperature lower than the melting point of the coupling pipe 12 and higher than the melting point of the brazing material. However, when the excess of the melted brazing material 17 protrudes from between the plates 21, 22, and 23 and flows into and comes into contact with the copper coupling pipe 12, a phenomenon may occur in which the melting point of the coupling pipe 12 decreases. When the melting point of the coupling pipe 12 decreases, the coupling pipe 12 is melted by in-furnace brazing, resulting in manufacturing failure.

The refrigerant flow path module 10 according to the present embodiment includes storages 40,41, and 42 that store the brazing material 17 in excess protruding from between the plates 21, 22, and 23. By storing the brazing material 17 in the storages 40, 41, and 42, the brazing material 17 is prevented from reaching the coupling pipe 12, and the coupling pipe 12 is prevented from melting.

The storage 40 according to the present embodiment is provided at a boundary portion between the end plate (first plate) 21 and the intermediate plate (second plate) 22 adjacent to the end plate 21. Specifically, the attachment hole 26 formed in the end plate 21 and into which the coupling pipe 12 is inserted is disposed inside the opening 24 formed in the intermediate plate 22 and constituting the flow path 15 as viewed in the first direction Z. Therefore, a plate surface (upper surface) of the end plate 21 facing the intermediate plate 22 is exposed in the flow path 15 around the coupling pipe 12. The storage 40 is formed at a boundary portion between an inner peripheral surface of the opening 24 and the plate surface of the end plate 21 facing the intermediate plate 22. In the storage 40, the brazing material 17 in excess protruding from between the plates 21, 22, and 23 is accumulated in a fillet shape and exists in a hardened state as indicated by reference sign 17c.

The coupling pipe 12 is connected to the lower end plate 21 illustrated in FIG. 5, but the coupling pipe 12 communicating with the flow path 15 is not connected to the upper end plate 21. A boundary portion between the plate surface (lower surface) of the end plate 21 facing the intermediate plate 22 and the inner peripheral surface of the opening 24 of the intermediate plate 22 also constitutes the storage 40. The brazing material 17 in excess protruding from between the plates 21 and 22 is also accumulated in a fillet shape and exists in a hardened state in the storage 40 as indicated by reference sign 17c.

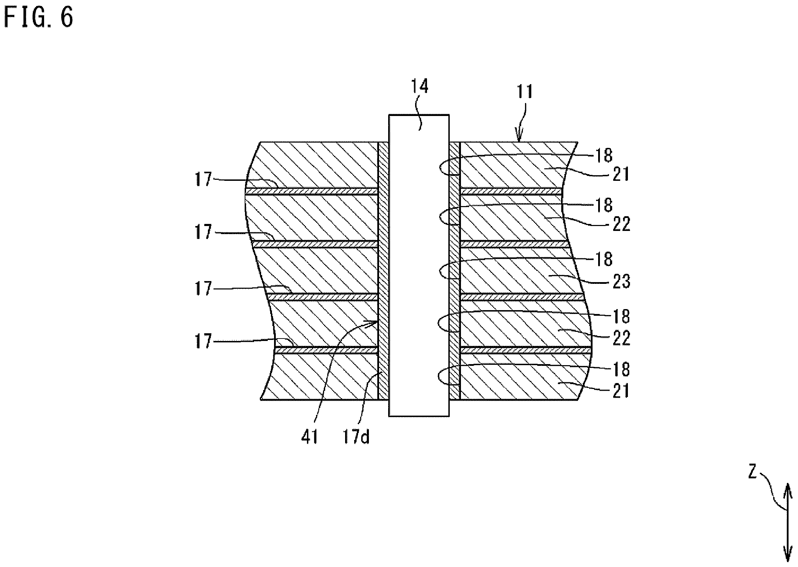

FIG. 6 is an enlarged sectional view of the refrigerant flow path module, illustrating a portion into which the insertion member is inserted.

The insertion member 14 is inserted into the insertion holes 18 formed in the plurality of plates 21, 22, and 23. The insertion member 14 is slightly longer than the length of the module body 11 in the first direction Z, and slightly protrudes from the end plates 21 on both sides. A slight gap is formed between the insertion member 14 and the insertion hole 18.

As described above, when the brazing material 17 is melted by in-furnace brazing, the brazing material 17 in excess protruding from between the plates 21, 22, and 23 flows into the gap between the insertion member 14 and the insertion hole 18 as indicated by reference sign 17d. As a result, the insertion member 14 and the plates 21, 22, and 23 are joined, and the brazing material 17d in excess is stored in the gap between the insertion member 14 and the insertion hole 18. Therefore, the gap between the insertion member 14 and the insertion hole 18 functions as the storage 41 that stores the brazing material 17d in excess. Since the brazing material 17d is stored in the storage 41, the amount of the brazing material 17 in excess protruding toward the flow path 15 decreases, and the brazing material 17 can be prevented from reaching the coupling pipe 12. Since the insertion hole 18 formed in the lower end plate 21 is opened downward, the brazing material 17 that cannot be completely stored in the storage 41 is discharged to the outside from a lower end of the insertion hole 18.

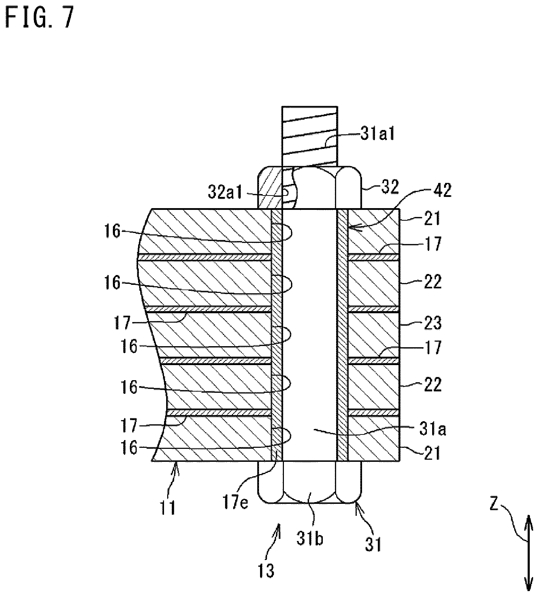

FIG. 7 is an enlarged sectional view of the refrigerant flow path module, illustrating a portion where the plates are fastened by the fastening member.

The fastening member 13 fastens the plurality of plates 21, 22, and 23 to each other. The bolt 31 constituting the fastening member 13 is, for example, a hexagonal bolt, and has a shaft 31a and a head 31b. The shaft 31a has a columnar shape. The head 31b is formed at one end of the shaft 31a in a longitudinal direction. An outer peripheral surface of the head 31b has a hexagonal shape. A screw groove 31a1 is formed in an outer peripheral surface at an end of the shaft 31a on an opposite side of the head 31b.

The nut 32 is, for example, a hexagonal nut. The nut 32 has a cylindrical shape. A screw groove 32a1 is formed in an inner peripheral surface of the nut 32. The screw groove 32a1 of the nut 32 can be engaged with the screw groove 31a1 of the bolt 31.

The shaft 31a of the bolt 31 is inserted into the insertion holes 16 formed in the plurality of plates 21, 22, and 23. A slight gap is formed between the bolt 31 (shaft 31a) and the insertion hole 16. As described above, when the brazing material 17 is melted by in-furnace brazing, the brazing material in excess protruding from between the plates 21, 22, and 23 flows into the gap between the bolt 31 and the insertion hole 16 as indicated by reference sign 17e. As a result, the brazing material 17e in excess is stored in the gap between the bolt 31 and the insertion hole 16. Therefore, the gap between the fastening member 13 and the insertion hole 16 functions as the storage 42 that stores the brazing material 17e in excess. Since the brazing material 17e is stored in the storage 42, the amount of the brazing material 17 in excess protruding toward the flow path 15 decreases, and the brazing material 17 can be prevented from reaching the coupling pipe 12.

### [Second embodiment]

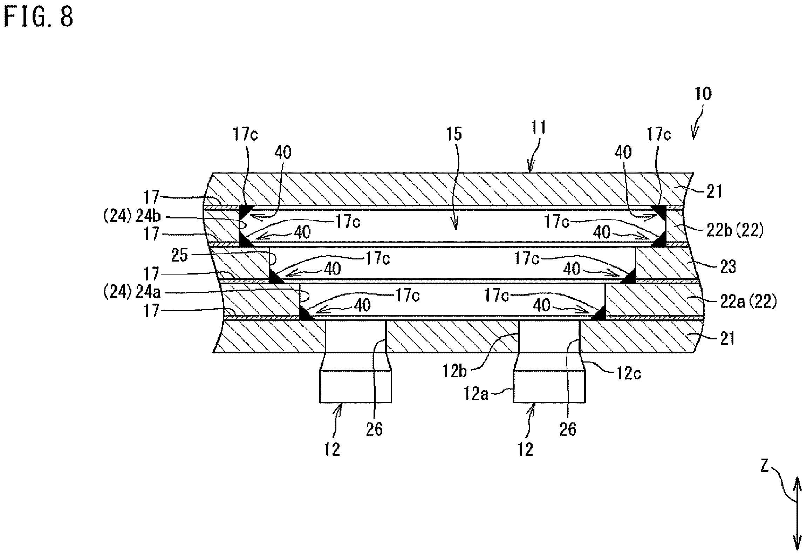

FIG. 8 is an enlarged sectional view of a part of a refrigerant flow path module according to a second embodiment.

In the refrigerant flow path module 10 according to the second embodiment, the sizes of the openings 24 and 25 formed in the intermediate plates 22 and 23 are different from each other. In the present embodiment, among the plurality of intermediate plates 22, an intermediate plate disposed on a lower side is denoted by reference sign 22a, and one disposed on an upper side is denoted by reference sign 22b. In the present embodiment, an opening of the intermediate plate 22a is denoted by reference sign 24a, and an opening of the intermediate plate 22b is denoted by reference sign 24b.

In the present embodiment, the opening (first opening) 24a similar to the opening according to the first embodiment is formed in the intermediate plate (second plate) 22a adjacent to the lower end plate (first plate) 21 to which the coupling pipe 12 is attached. The attachment hole 26 to which the coupling pipe 12 is attached is disposed inside the first opening 24a as viewed in the first direction Z.

The opening (second opening) 25 is formed in another intermediate plate (third plate) 23 adjacent to the upper side of the intermediate plate 22a. The first opening 24a is attached is disposed inside the second opening 25 as viewed in the first direction Z. Furthermore, an opening 24b (third opening) is formed in another intermediate plate (fourth plate) 22b adjacent to the upper side of the another intermediate plate 23. The second opening 25 is disposed inside the third opening 24b as viewed in the first direction Z. Therefore, in the present embodiment, the openings 24a, 25, and 24b formed in the intermediate plates 22a, 23, and 22b gradually increase as a distance from the end plate 21 provided with the coupling pipe 12 increases.

In the present embodiment, as in the first embodiment, the storage 40 is provided at a boundary portion between the end plate (first plate) 21 to which the coupling pipe 12 is attached and the intermediate plate (second plate) 22a adjacent to the end plate 21. Specifically, the attachment hole 26 into which the coupling pipe 12 is inserted is disposed inside the opening 24 formed in the intermediate plate 22 and constituting the flow path 15 as viewed in the first direction Z. Therefore, the plate surface of the end plate 21 facing the intermediate plate 22 is exposed in the flow path 15 around the coupling pipe 12. The storage 40 is formed at a boundary portion between an inner peripheral surface of the first opening 24a and the plate surface of the end plate 21 facing the intermediate plate 22. In the storage 40, the brazing material 17 in excess protruding from between the plates 21 and 22a is accumulated in a fillet shape and exists in a hardened state as indicated by reference sign 17c.

The plate surface (upper surface) of the intermediate plate (second plate) 22a facing the intermediate plate (third plate) 23 is exposed in the flow path 15. Therefore, the storage 40 is also formed at a boundary portion between an inner peripheral surface of the second opening 25 and the plate surface of the intermediate plate 22a facing the intermediate plate 23. The brazing material 17 in excess protruding from between the intermediate plates 22a and 23 is accumulated in a fillet shape and exists in a hardened state in the storage 40 as indicated by reference sign 17c.

Similarly, the plate surface (upper surface) of the intermediate plate (third plate) 23 facing the intermediate plate (fourth plate) 22b is exposed in the flow path 15. Therefore, the storage 40 is formed between an inner peripheral surface of the third opening 24b and the plate surface of the intermediate plate 23 facing the intermediate plate 22b. The brazing material 17 in excess protruding from between the intermediate plates 22b and 23 is accumulated in a fillet shape and exists in a hardened state in the storage 40 as indicated by reference sign 17c.

In FIG. 8, the coupling pipe 12 communicating with the flow path 15 is not connected to the upper end plate 21. A boundary portion between the plate surface (lower surface) of the end plate 21 facing the intermediate plate 22b and the inner peripheral surface of the opening 24b of the intermediate plate 22b also constitutes the storage 40. The brazing material 17 in excess protruding from between the plates 21 and 22b is also accumulated in a fillet shape and exists in a hardened state in the storage 40 as indicated by reference sign 17c.

### [Third embodiment]

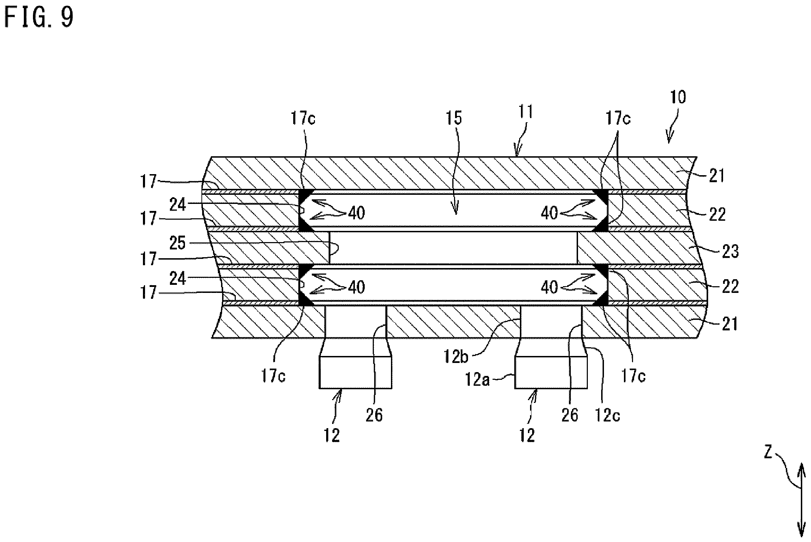

FIG. 9 is an enlarged sectional view of a part of a refrigerant flow path module according to a third embodiment.

In the third embodiment, as in the first embodiment, the openings 24 and 25 are formed in the plurality of intermediate plates 22 and 23, respectively. Among the intermediate plates 22 and 23, the opening 25 formed in the intermediate plate (third plate) 23 in the middle is smaller than the opening 24 formed in the upper and lower intermediate plates 22. Specifically, the opening 25 formed in the intermediate plate 23 is disposed inside the opening 24 of the intermediate plate 22 as viewed in the first direction Z. Therefore, the plate surfaces (upper and lower surfaces) of the intermediate plate 23 facing the intermediate plate 22 are exposed in the flow path 15. As a result, in the present embodiment, a boundary portion between the inner peripheral surface of the opening 24 and a plate surface of the intermediate plate 23 facing the intermediate plate 22 constitutes the storage 40. Other configurations are similar to the configurations in the first embodiment.

### [Fourth embodiment]

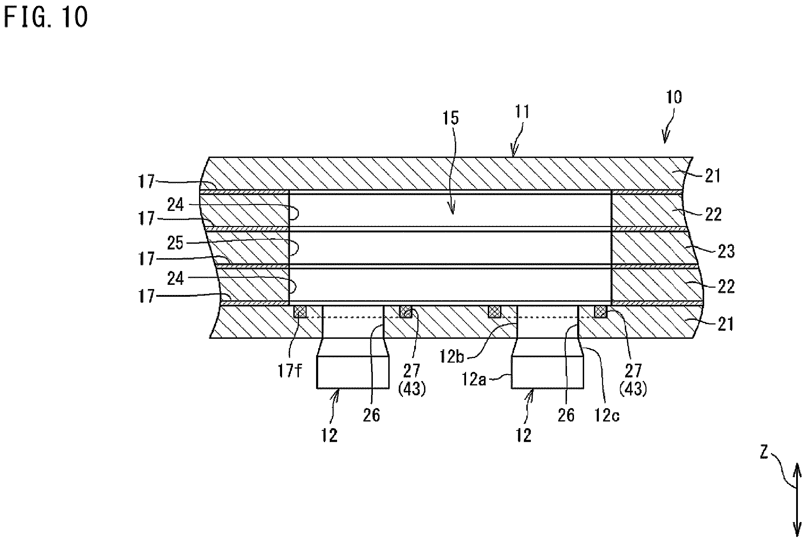

FIG. 10 is an enlarged sectional view of a part of a refrigerant flow path module according to a fourth embodiment.

In the present embodiment, a groove 27 is formed around the attachment hole 26 of the end plate 21 to which the coupling pipe 12 is attached. The groove 27 is formed in the plate surface (upper surface) of the end plate 21 exposed in the flow path 15. In other words, the groove 27 is disposed away from the attachment hole 26 radially outward and is formed in a portion of the plate surface of the end plate 21 facing the intermediate plate 22, the portion facing the flow path 15.

The brazing material 17 in excess protruding from between the plates 21, 22, and 23 enters the groove 27 and is stored before reaching the coupling pipe 12 as indicated by reference sign 17f. Accordingly, the groove 27 constitutes the storage 43. It is therefore possible to suppress a decrease in the melting point of the coupling pipe 12 due to a contact of the brazing material 17. The groove 27 may be formed so as to surround an entire circumference of the attachment hole 26, or may be partially formed in a region where there is a high possibility that the brazing material 17 in excess flows in.

### [Fifth embodiment]

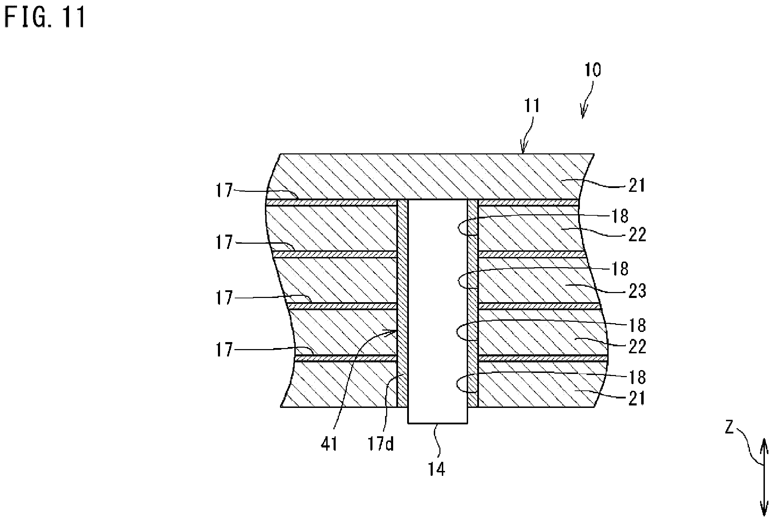

FIG. 11 is an enlarged sectional view of a portion into which an insertion member is inserted in a refrigerant flow path module according to a fifth embodiment.

In the present embodiment, unlike the first embodiment, the insertion member 14 does not pass through the module body 11. Specifically, among the plates 21, 22, and 23 constituting the module body 11, the insertion hole 18 is formed in the lower end plate 21 and the intermediate plates 22 and 23, but the insertion hole is not formed in the upper end plate 21. Therefore, the insertion member 14 is inserted into the insertion hole 18 from the lower side of the module body 11 in FIG. 11 and does not protrude upward.

In the present embodiment, since each of the brazing materials 17 is connected to the gap (storage 41) between the insertion member 14 and the insertion hole 18, the brazing material 17 in excess flows into and is stored in the storage 41. Since the insertion hole 18 formed in the lower end plate 21 is opened downward, the brazing material 17d that cannot be completely stored in the storage 41 is discharged to the outside.

### [Sixth embodiment]

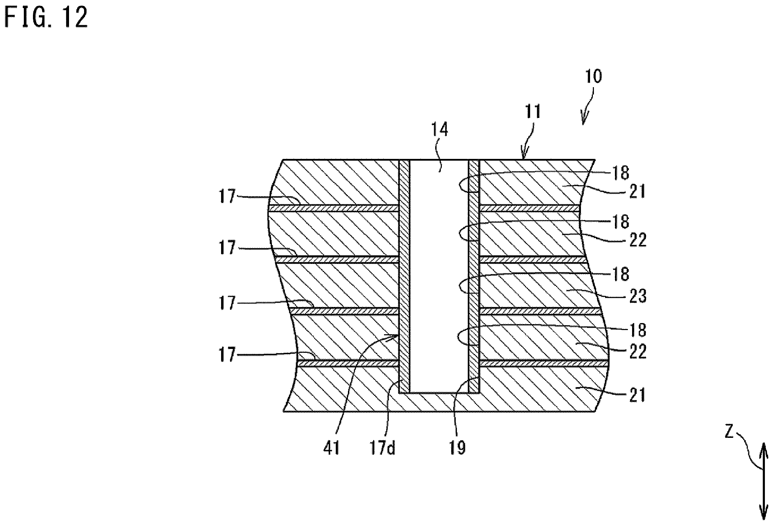

FIG. 12 is an enlarged sectional view of a portion into which an insertion member is inserted in a refrigerant flow path module according to a sixth embodiment.

In the present embodiment, unlike the first embodiment, the insertion member 14 does not pass through the module body 11. Specifically, among the plates 21, 22, and 23 constituting the module body 11, the insertion hole 18 passing in the first direction Z is formed in the upper end plate 21 and the intermediate plates 22 and 23, but the insertion hole passing in the first direction Z is not formed in the lower end plate 21. The lower end plate 21 is provided with an insertion hole 19 that is opened upward and closed downward.

In the present embodiment, since each of the brazing materials 17 is connected to the gap (storage 41) between the insertion member 14 and the insertion holes 18 and 19, the brazing material 17 in excess is stored in the storage 41. However, in the present embodiment, since a lower end of the storage 41 is not opened to the outside, the brazing material 17 in excess is not discharged.

### [Seventh embodiment]

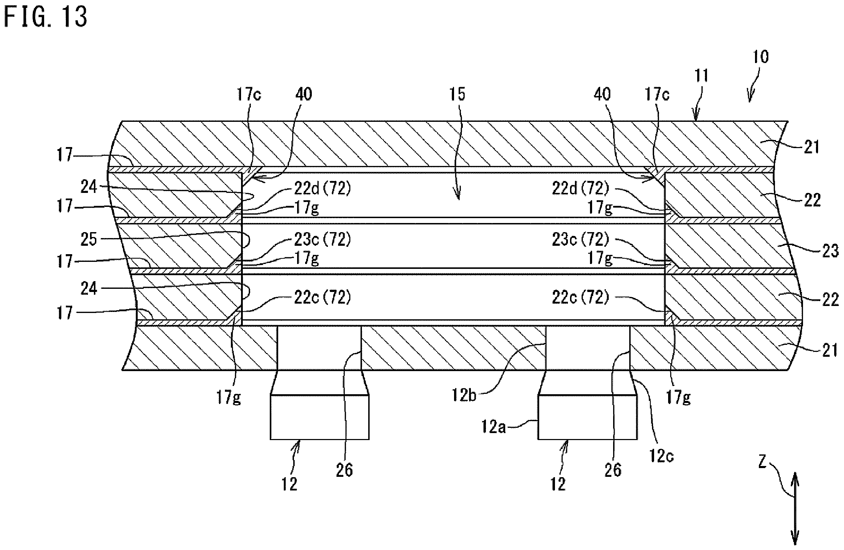

FIG. 13 is an enlarged sectional view of a part of a refrigerant flow path module according to a seventh embodiment.

In the seventh embodiment, as in the first embodiment, the openings 24 and 25 are formed in the plurality of intermediate plates 22 and 23, respectively. The openings 24 and 25 formed in the plurality of intermediate plates 22 and 23 have the same size. In each of the intermediate plates 22 and 23, chamfered portions 22c, 22d, and 23c are formed at boundaries between the inner peripheral surfaces of the openings 24 and 25 and the lower plate surface (lower surface). Each of the chamfered portions 22c, 22d, and 23c according to the present embodiment is C-chamfered, and is constituted by a tapered surface inclined between each of the inner peripheral surfaces of the openings 24 and 25 and the lower plate surface. However, the chamfered portions 22c, 22d, and 23c may be R-chamfered (round chamfered).

Specifically, in the intermediate plate (second plate) 22 adjacent to the end plate (first plate) 21 to which the coupling pipe 12 is attached, the chamfered portion (first chamfered portion) 22c is formed at the boundary between the inner peripheral surface of the opening (first opening) 24 and the plate surface facing the end plate 21 (on the lower side). The chamfered portion 22c forms a space having a substantially triangular cross section between the end plate 21 and the intermediate plate 22, and a brazing material 17g in excess protruding from between the plates 21 and 22 is accumulated in the space and exists in a hardened state. Therefore, the chamfered portion 22c functions as a storage 72 of the brazing material 17g in excess.

Similarly, in another intermediate plate (third plate) 23 adjacent to the upper side of the intermediate plate (second plate) 22, a chamfered portion (second chamfered portion) 23c is formed at the boundary between the inner peripheral surface of the opening (second opening) 25 and the plate surface facing the intermediate plate (second plate) 22 (on the lower side). Furthermore, in still another intermediate plate (fourth plate) 22 adjacent to the upper side of the another intermediate plate (third plate) 23, a chamfered portion (second chamfered portion) 22d is formed at the boundary between the inner peripheral surface of the opening (third opening) 24 and the plate surface facing the another intermediate plate (third plate) 23 (on the lower side). The chamfered portions 23c and 22d form a space having a substantially triangular cross section between the intermediate plate 22 and the intermediate plate 23, and the brazing material 17g in excess protruding from between the plates 21 and 22 is accumulated in the space and exists in a hardened state. Therefore, the chamfered portions 23c and 22d function as the storage 72 of the brazing material 17g in excess.

In the present embodiment, as in the first embodiment (see FIG. 5), the boundary portion between the plate surface (lower surface) of the upper end plate 21 facing the intermediate plate 22 and the inner peripheral surface of the opening 24 of the intermediate plate 22 functions as the storage 40, and the brazing material 17c in excess is accumulated in a fillet shape and exists in a hardened state.

Since the refrigerant flow path module 10 according to the present embodiment includes the storage 72 including the chamfered portions 22c, 23c, and 22d, the brazing material 17g in excess can be prevented from entering the inside of the openings 24 and 25.

In the present embodiment, the storage 72 can be formed even if the openings 24 and 25 of the plurality of intermediate plates 22 and 23 have the same size. However, in the present embodiment, as in the embodiment illustrated in FIG. 8 or 9, for example, the openings 24 and 25 of the intermediate plates 22 and 23 may have different sizes.

### [Eighth embodiment]

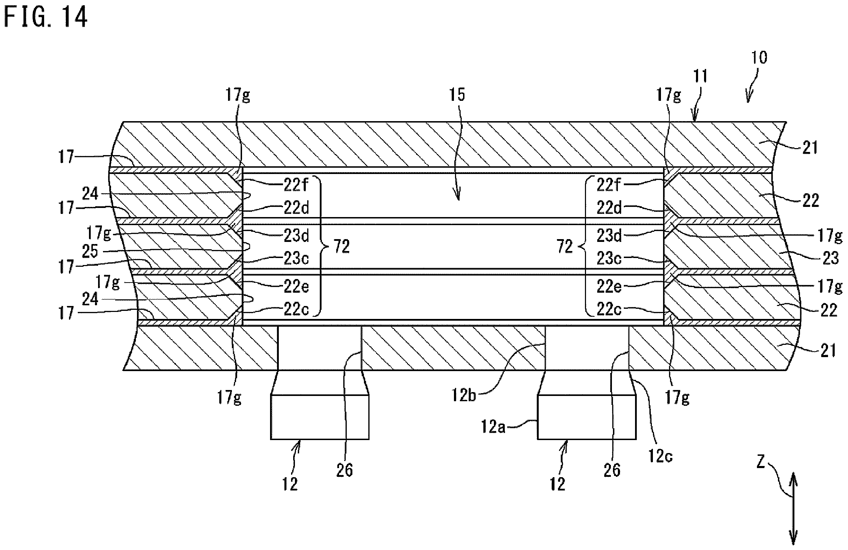

FIG. 14 is an enlarged sectional view of a part of a refrigerant flow path module according to an eighth embodiment.

In the eighth embodiment, as in the seventh embodiment, chamfered portions 22c, 22d, 23c, 22e, 22f, and 23d are formed on the intermediate plates 22 and 23, respectively. However, in the present embodiment, the chamfered portions 22c, 22d, 23c, 22e, 22f, and 23d are formed at boundaries between the inner peripheral surfaces of the openings 24 and 25 of the intermediate plates 22 and 23 and the upper and lower plate surfaces, respectively. Each of the chamfered portions 22c, 22d, 23c, 22e, 22f, and 23d according to the present embodiment is C-chamfered, and is constituted by a tapered surface inclined between the inner peripheral surface of each of the openings 24 and 25 and the upper and lower plate surface. However, the chamfered portions 22c, 22d, 23c, 22e, 22f, and 23d may be R-chamfered (round chamfered).

Specifically, in the eighth embodiment, in addition to the chamfered portions 22c, 23c, and 22d described in the seventh embodiment, the chamfered portions (second chamfered portions) 22e, 22f, and 23d are also formed at boundaries between the inner peripheral surfaces of the openings 24 and 25 formed in the intermediate plates (second plate, third plate, and fourth plate) 23, 23, and 22 and the upper plate surfaces of the intermediate plates 22, 23, and 22.

Therefore, in the present embodiment, the storage 72 located between the intermediate plates 22 and 23 adjacent to each other can be formed large, and a storage amount of the brazing material 17g in excess can be increased. Furthermore, in the present embodiment, the storage 72 including the chamfered portion 22f can also be provided between the upper end plate 21 and the intermediate plate 22 adjacent to the upper end plate 21.

In the eighth embodiment, the second chamfered portion may include only the second chamfered portions 22e, 22f, 23c, and 23d formed at the boundaries between the inner peripheral surfaces of the openings 24 and 25 formed in the intermediate plate (second plate 22, third plate 23, and fourth plate 22) and the upper plate surfaces of the intermediate plates 22, 23, and 22.

### [Ninth embodiment]

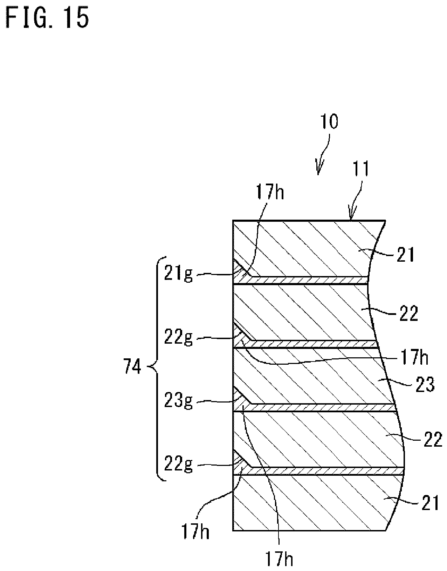

FIG. 15 is an enlarged sectional view of a part of a refrigerant flow path module according to a ninth embodiment.

In the ninth embodiment, chamfered portions 21g, 22g, and 23g are formed at boundaries between the outer peripheral surfaces of the upper end plate 21 and the intermediate plates 22 and 23 of the module body 11 and the lower plate surfaces of the plates 21, 22, and 23. Each of the chamfered portions 21g, 22g, and 23g is C-chamfered, and is constituted by a tapered surface inclined between the outer peripheral surface of each of the plates 21, 22, and 23 and the lower plate surface. However, the chamfered portions 21g, 22g, and 23g may be R-chamfered (round chamfered).

Specifically, in the intermediate plate (second plate) 22 adjacent to the lower end plate (first plate) 21, the chamfered portion (third chamfered portion) 22g is formed at the boundary between the outer peripheral surface and the plate surface facing the end plate 21 (on the lower side). The chamfered portion 22g forms a space having a substantially triangular cross section between the end plate 21 and the intermediate plate 22, and a brazing material 17h in excess protruding from between the plates 21 and 22 is accumulated in the space and exists in a hardened state. Therefore, the chamfered portion 22g functions as a storage 74 of the brazing material 17h in excess.

Similarly, in another intermediate plate (third plate) 23 adjacent to the upper side of the intermediate plate (second plate) 22, the chamfered portion 23g is formed at the boundary between the outer peripheral surface and the plate surface facing the intermediate plate (second plate) 22 (on the lower side). Furthermore, in still another intermediate plate (fourth plate) 22 adjacent to the upper side of the another intermediate plate (third plate) 23, the chamfered portion 22g is formed at the boundary between the outer peripheral surface and the plate surface facing the another intermediate plate (third plate) 23 (on the lower side). In the upper end plate 21 adjacent to still another intermediate plate (fourth plate) 22, the chamfered portion 21g is formed at a boundary between the outer peripheral surface and the plate surface facing the still another intermediate plate (fourth plate) 22 (on the lower side).

By the chamfered portions 21g, 22g, and 23g, a space having a substantially triangular cross section is formed between the intermediate plate 22 and the intermediate plate 23 and between the intermediate plate 22 and the end plate 21, and the brazing material 17h in excessive protruding from between the plates 21, 22, and 23 is accumulated and exists in a hardened state in the space. Therefore, the chamfered portions 21g, 22g, and 23g also function as the storage 74 of the brazing material 17h in excess.

In the present embodiment, the brazing material 17h melted by in-furnace brazing and protruding from between the end plate 21 and the intermediate plates 22 and 23 to the outer peripheral surface is stored in the storage 74. Therefore, the amount of the brazing material 17 in excess protruding toward the flow path 15 decreases, and the brazing material 17 can be prevented from reaching the copper coupling pipe 12.

### [Tenth embodiment]

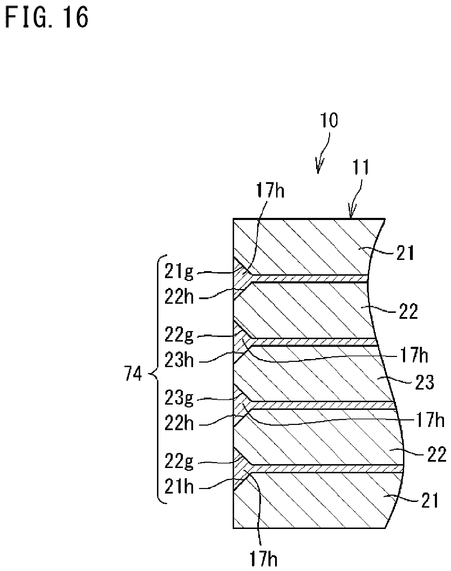

FIG. 16 is an enlarged sectional view of a part of a refrigerant flow path module according to a tenth embodiment.

In the tenth embodiment, as in the ninth embodiment, the chamfered portions 21g, 22g, and 23g are formed on the intermediate plates 22 and 23 and the upper end plate 21, respectively. However, in the present embodiment, chamfered portions 22h and 23h are also formed at boundaries between the outer peripheral surfaces of the intermediate plates 22 and 23 and the upper plate surfaces, respectively. Furthermore, in the present embodiment, a chamfered portion (third chamfered portion) 21h is also formed at the boundary between the outer peripheral surface of the lower end plate (first plate) 21 and the upper plate surface.

Each of the chamfered portions 21g, 21h, 22g, 22h, 23g, and 23h is C-chamfered, and is constituted by a tapered surface inclined between the outer peripheral surface of each of the plates 21, 22, and 23 and the upper or lower plate surface. However, the chamfered portions 21g, 21h, 22g, 22h, 23g, and 23h may be R-chamfered (round chamfered).

In the present embodiment, the storage 74 located between the end plate 21 and the intermediate plate 22 adjacent to each other and between the intermediate plates 22 and 23 adjacent to each other can be formed large, and the storage amount of the brazing material 17g in excess can be increased.

In the tenth embodiment, the third chamfered portion may be formed only at the boundary between the outer peripheral surface of the lower end plate (first plate) 21 and the upper plate surface.

Some or all of the first to tenth embodiments described above can be implemented in combination with each other.

### [Configuration of air conditioner]

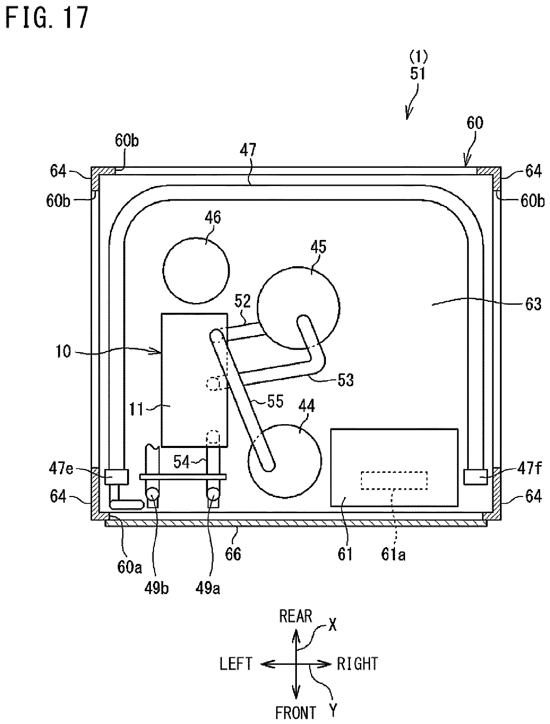

FIG. 17 is a plan view illustrating an inside of an air conditioner according to an embodiment of the present disclosure.

FIG. 17 illustrates an outdoor unit 51 of an air conditioner 1. The air conditioner 1 is of a separate type and includes an outdoor unit and an indoor unit provided separately from the outdoor unit. The outdoor unit 51 is provided with the refrigerant flow path module 10 described above.

As illustrated in FIG. 17, the outdoor unit 51 includes a casing 60 accommodating components such as a compressor 44, an accumulator 45, an outdoor heat exchanger 47, and an oil separator 46 constituting the refrigerant circuit, an electric component unit 61, and the like. The casing 60 has a substantially rectangular parallelepiped shape. The casing 60 has a bottom plate 63, a support 64, a top panel (not illustrated), a front panel 66, and the like. The bottom plate 63 and the top panel have a quadrilateral shape in a top view. The support 64 is a long member having a substantially L sectional shape and elongating in an up-down direction, and is attached to each of four corners of the bottom plate 63 and the top panel.

The casing 60 has a front surface provided with an opening 60a for maintenance. The opening 60a is closed by the front panel (front side plate) 66. Detaching the front panel 66 from the casing 60 enables maintenance, replacement, and the like of the components in the casing 60 through the opening 60a.

The bottom plate 63 of the casing 60 is provided thereon with the components such as the compressor 44, the accumulator 45, the outdoor heat exchanger 47, and the oil separator 46. The outdoor heat exchanger 47 is disposed corresponding to (facing) three side surfaces of the casing 60, specifically, a left side surface, a right side surface, and a rear side surface of the casing 60. The outdoor heat exchanger 47 has one end provided with a gas header 47e and the other end provided with a liquid header 47f. The left side surface, the right side surface, and the rear side surface of the casing 60 are each provided with an intake port 60b for taking in outdoor air.

The outdoor unit 51 is configured to take in air from the intake port 60b of the casing 60 by driving of a fan (not illustrated), perform heat exchange between the air and the outdoor heat exchanger 47, and then blow out the air upward from an upper part of the casing 60.

The compressor 44 is disposed at a substantially center in a left-right direction Y near the front surface of the casing 60. The electric component unit 61 is disposed near the front surface of the casing 60 and adjacent to a right side of the compressor 44. The accumulator 45 is disposed behind the compressor 44. The oil separator 46 is disposed on a left side of the accumulator 45. The electric component unit 61 includes a controller 61a that controls behavior of the compressor 44, a valve, a fan, and the like.

The outdoor unit 51 is provided with the refrigerant flow path module 10 as described above. The refrigerant flow path module 10 constitutes a part of a flow path of a refrigerant pipe that connects components of a refrigerant circuit such as the compressor 44, the accumulator 45, a flow path switching valve, the outdoor heat exchanger 47, an expansion valve, the oil separator 46, and shutoff valves 49a and 49b.

The refrigerant flow path module 10 according to the first to tenth embodiments is disposed on the left side (one side in the third direction Y) of the compressor 44 and the accumulator 45. The refrigerant flow path module 10 is disposed on a front side (one side in the second direction X) of the oil separator 46. The refrigerant flow path module 10 according to the present embodiment is supported in the casing 60 in an orientation in which the plate surfaces of the plates 21, 22, and 23 (see FIG. 1) constituting the module body 11 are horizontal. For example, the refrigerant flow path module 10 is supported by refrigerant pipes 52 to 55 via the components 49a, 44, 45, and the like of the refrigerant circuit fixed in the casing 60.

### [Action and effects of embodiments]

As illustrated in FIGs. 5 to 16, the refrigerant flow path module 10 according to the above embodiment includes the first plate (for example, the end plate 21), the second plate (for example, the intermediate plate 22) that is overlapped on the first plate 21, the refrigerant pipe (for example, the coupling pipe 12) that contains copper and is attached to the first plate 21, the brazing material 17 that contains copper and joins facing surfaces of the first plate 21 and the second plate 22 to each other, and the storages 40, 41, 42, 43, 72, and 74 that store the brazing material 17 in excess. It is therefore possible to prevent the brazing material 17 in excess from reaching the refrigerant pipe 12 and melting the refrigerant pipe 12.

In the above embodiment, as illustrated in FIGs. 5, 8, and 9, the refrigerant pipe 12 is attached to the attachment hole 26 formed in the first plate 21, the opening 24 that communicates with the refrigerant pipe 12 and constitutes the flow path 15 is formed in the second plate 22, the attachment hole 26 is disposed inside the opening 24 as viewed in the stacking direction (first direction Z) of the first plate 21 and the second plate 22, and the storage 40 is formed at the boundary portion between the inner peripheral surface of the opening 24 and the plate surface of the first plate 21 facing the second plate 22. Therefore, the brazing material 17 in excess is stored by utilizing the boundary portion between the inner peripheral surface of the opening 24 and the plate surface of the first plate 21, and the brazing material 17 can be prevented from reaching the refrigerant pipe 12.

In the above embodiment, as illustrated in FIG. 10, the refrigerant pipe 12 is attached to the attachment hole 26 formed in the first plate 21, the opening 24 that communicates with the refrigerant pipe 12 and constitutes the flow path 15 is formed in the second plate 22, the attachment hole 26 is disposed inside the opening 24 as viewed in the stacking direction (first direction Z) of the first plate 21 and the second plate 22, and the storage 43 includes the groove 27 that is disposed away from the attachment hole 26 radially outward and is formed in a portion of the plate surface of the first plate 21 facing the second plate 22, the portion facing the flow path 15. As a result, by storing the brazing material 17 in excess in the groove 27, the brazing material 17 can be prevented from reaching the refrigerant pipe 12.

In the above embodiment, as illustrated in FIG. 8, the third plate (for example, the intermediate plate 23) that is overlapped on a side of the second plate 22 opposite to the first plate 21, and the brazing material 17 that contains copper and joins facing surfaces of the second plate 22 and the third plate 23 to each other are included, the second opening (for example, the opening 25) that communicates with the refrigerant pipe 12 and constitutes the flow path 15 is formed in the third plate 23, the opening 24 is disposed inside the second opening 25 as viewed from the stacking direction (first direction Z) of the first plate 21 and the second plate 22, and the storage 40 is formed at the boundary portion between the inner peripheral surface of the second opening 25 and the plate surface of the second plate 22 facing the third plate 23. As a result, the brazing material 17 in excess is stored by utilizing the boundary portion between the inner peripheral surface of the second opening 25 and the plate surface of the second plate 22, and the brazing material 17 can be prevented from reaching the refrigerant pipe 12.

In the above embodiment, as illustrated in FIG. 9, the third plate (for example, the intermediate plate 23) that is overlapped on a side of the second plate 22 opposite to the first plate 21, and the brazing material 17 that contains copper and joins facing surfaces of the second plate 22 and the third plate 23 to each other are included, the second opening (for example, the opening 25) that communicates with the refrigerant pipe 12 and constitutes the flow path 15 is formed in the third plate 23, the second opening 25 is disposed inside the opening 24 as viewed from the stacking direction of the first plate 21 and the second plate 22, and the storage 40 is formed at the boundary portion between the inner peripheral surface of the opening 24 and the plate surface of the third plate 23 facing the second plate 22. As a result, the brazing material 17 in excess is stored by utilizing the boundary portion between the inner peripheral surface of the opening 24 and the plate surface of the third plate 23, and the brazing material 17 can be prevented from reaching the refrigerant pipe 12.

In the above embodiment, as illustrated in FIGs. 6, 11, and 12, the storage 41 includes the insertion holes 18 and 19 formed in the first plate 21 and opened on the plate surface of the first plate 21 facing the second plate 22, and the insertion member 14 inserted into the insertion holes 18 and 19 with a gap. As a result, the brazing material 17 in excess is stored by utilizing the gap between the insertion holes 18 and 19 and the insertion member 14, and the brazing material 17 can be prevented from reaching the refrigerant pipe 12.

In the above embodiment, as illustrated in FIGs. 6 and 11, in the stacking direction of the first plate 21 and the second plate 22, the first plate 21 is disposed at an end of the refrigerant flow path module 10, and the insertion hole 18 is opened on the plate surface of the first plate 21 opposite to the second plate 22. As a result, the brazing material 17 in excess can be discharged to the outside of the refrigerant flow path module 10 from the gap (storage 41) between the insertion hole 18 and the insertion member 14.

In the above embodiment, as illustrated in FIGs. 13 and 14, the refrigerant pipe 12 is inserted into the hole 26 formed in the first plate 21, the opening 24 that communicates with the refrigerant pipe 12 and constitutes the flow path 15 is formed in the second plate 22, the chamfered portion 22c is formed at the boundary between the inner peripheral surface of the opening 24 in the second plate 22 and the plate surface of the second plate 22 facing the first plate 21, and the storage 72 includes the chamfered portion 22c. As a result, the brazing material 17 in excess is stored by utilizing the space formed by the chamfered portion 22c, and the brazing material 17 can be prevented from reaching the refrigerant pipe 12.

In the above embodiment, as illustrated in FIGs. 13 and 14, the third plate 23 that is overlapped on a side opposite to the first plate 21 of the second plate 22, and the brazing material 17 that contains copper and joins facing surfaces of the second plate 22 and the third plate 23 are provided, the second opening 25 that communicates with the refrigerant pipe 12 and constitutes the flow path 15 is formed in the third plate 23, the second chamfered portions 23c and 22e are formed at the boundary between the inner peripheral surface of the second opening 25 in the third plate 23 and the plate surface of the third plate 23 facing the second plate 22 or the boundary between the inner peripheral surface of the first opening 24 in the second plate 22 and the plate surface of the second plate 22 facing the third plate 23, and the storage 72 includes the chamfered portion the second chamfered portions 23c and 22e. As a result, the brazing material 17 in excess protruding from between the second plate 22 and the third plate 23 is stored by utilizing a space formed by the second chamfered portions 23c and 22e, and the brazing material 17 can be prevented from reaching the refrigerant pipe 12.

In the above embodiment, as illustrated in FIGs. 15 and 16, the third chamfered portions 22g and 21h are formed at the boundary between the outer peripheral surface of the second plate 22 and the plate surface of the second plate 22 facing the first plate 21 or the boundary between the outer peripheral surface of the first plate 21 and the plate surface of the first plate 21 facing the second plate 22, and the storage 74 includes the third chamfered portions 22g and 21h. As a result, the brazing material 17 in excess protruding from between the first plate 21 and the second plate 22 is stored by utilizing a space formed by the third chamfered portions 22g and 21h, and the brazing material 17 can be prevented from reaching the refrigerant pipe 12 from the first opening 24.

The foregoing description concerns the embodiments, and it will be understood that numerous modifications and variations may be made without departing from the gist and scope of the appended claims.

For example, the number of plates constituting the module body is not limited to the above embodiments, and the module body only needs to include at least two plates (the first plate and the second plate).

### REFERENCE SIGNS LIST

- 12: coupling pipe (refrigerant pipe)
- 14: insertion member
- 15: flow path
- 17: brazing material
- 18: insertion hole
- 19: insertion hole
- 21: end plate (first plate)
- 21h: chamfered portion (third chamfered portion)
- 22: intermediate plate (second plate)
- 22c: chamfered portion (first chamfered portion)
- 22e: chamfered portion (second chamfered portion)
- 22g: chamfered portion (third chamfered portion)
- 23: intermediate plate (third plate)
- 23c: chamfered portion (second chamfered portion)
- 24: opening
- 25: second opening
- 26: attachment hole
- 27: groove
- 40: storage
- 41: storage
- 42: storage
- 43: storage
- 72: storage
- 74: storage

## Claims

1. A refrigerant flow path module provided with a refrigerant flow path (15) inside, the refrigerant flow path module comprising:
a first plate (21);
a second plate (22) that is overlapped on the first plate (21);
a refrigerant pipe (12) that contains copper and is attached to the first plate (21);
a brazing material (17) that contains copper and joins facing surfaces of the first plate (21) and the second plate (22) to each other; and
a storage (40, 41, 42, 43, 72, 74) that stores the brazing material (17) in excess.

2. The refrigerant flow path module according to claim 1, wherein
the refrigerant pipe (12) is inserted into a hole (26) formed in the first plate (21),
the second plate (22) is provided with an opening (24) that communicates with the refrigerant pipe (12) and constitutes the flow path (15),
the hole (26) is disposed inside the opening (24) as viewed in a stacking direction of the first plate (21) and the second plate (22), and
the storage (40) is formed at a boundary portion between an inner peripheral surface of the opening (24) and a plate surface of the first plate (21) facing the second plate (22).

3. The refrigerant flow path module according to claim 1, wherein
the refrigerant pipe (12) is inserted into a hole (26) formed in the first plate (21),
the second plate (22) is provided with an opening (24) that communicates with the refrigerant pipe (12) and constitutes the flow path (15),
the hole (26) is disposed inside the opening (24) as viewed in the stacking direction of the first plate (21) and the second plate (22), and
the storage (43) includes a groove (27) disposed away from the hole (26) radially outward and formed in a portion of the plate surface of the first plate (21) facing the second plate (22), the portion facing the flow path (15).

4. The refrigerant flow path module according to claim 2 or 3, further comprising:
a third plate (23) that is overlapped on a side of the second plate (22) opposite to the first plate (21); and
a brazing material (17) that contains copper and joins facing surfaces of the second plate (22) and the third plate (23) to each other,
wherein the third plate (23) is provided with a second opening (25) that communicates with the refrigerant pipe (12) and constitutes the flow path (15),
the opening (24) is disposed inside the second opening (25) as viewed in the stacking direction of the first plate (21) and the second plate (22), and
the storage (40) is formed at a boundary portion between an inner peripheral surface of the second opening (25) and a plate surface of the second plate (22) facing the third plate (23).

5. The refrigerant flow path module according to claim 2 or 3, further comprising:
a third plate (23) that is overlapped on a side of the second plate (22) opposite to the first plate (21); and a brazing material (17) that contains copper and joins facing surfaces of the second plate (22) and the third plate (23) to each other,
wherein a second opening (25) that communicates with the refrigerant pipe (12) and constitutes the flow path (15) is formed in the third plate (23), and
the second opening (25) is disposed inside the opening (24) as viewed in the stacking direction of the first plate (21) and the second plate (22), and
the storage (40) is formed at a boundary portion between the inner peripheral surface of the opening (24) and a plate surface of the third plate (23) facing the second plate (22).

6. The refrigerant flow path module according to claim 1, wherein the storage (41) includes an insertion hole (18, 19) formed in the first plate (21) and opened on the plate surface of the first plate (21) facing the second plate (22), and an insertion member (14) inserted into the insertion hole (18, 19) with a gap.

7. The refrigerant flow path module according to claim 6, wherein
the first plate (21) is disposed at an end of the refrigerant flow path module (10) in the stacking direction of the first plate (21) and the second plate (22), and
the insertion hole (18) is opened on a plate surface of the first plate (21) opposite to the second plate (22).

8. The refrigerant flow path module according to claim 1, wherein
the refrigerant pipe (12) is inserted into a hole (26) formed in the first plate (21),
the second plate (22) is provided with an opening (24) that communicates with the refrigerant pipe (12) and constitutes the flow path (15),
a chamfered portion (22c) is formed at a boundary between an inner peripheral surface of the opening (24) in the second plate (22) and a plate surface of the second plate (22) facing the first plate (21), and
the storage (72) includes the chamfered portion (22c).

9. The refrigerant flow path module according to claim 8, further comprising:
a third plate (23) that is overlapped on a side of the second plate (22) opposite to the first plate (21); and
a brazing material (17) that contains copper and joins facing surfaces of the second plate (22) and the third plate (23) to each other,
wherein the third plate (23) is provided with a second opening (25) that communicates with the refrigerant pipe (12) and constitutes the flow path (15),
a second chamfered portion (22e, 23c) is formed at a boundary between an inner peripheral surface of the second opening (25) in the third plate (23) and a plate surface of the third plate (23) facing the second plate (22) or at a boundary between the inner peripheral surface of the first opening (24) in the second plate (22) and a plate surface of the second plate (22) facing the third plate (23), and
the storage (72) includes the second chamfered portion (22e, 23c).

10. The refrigerant flow path module according to any one of claims 1 to 9, wherein
a third chamfered portion (22g, 21h) is formed at a boundary between an outer peripheral surface of the second plate (22) and the plate surface of the second plate (22) facing the first plate (21) or at a boundary between an outer peripheral surface of the first plate (21) and a plate surface of the first plate (21) facing the second plate (22), and
the storage (74) includes the third chamfered portion (22g, 21h).

11. An air conditioner comprising the refrigerant flow path module according to any one of claim 1 to 10.
